# EUROPÄISCHE PATENTANMELDUNG

(11) **EP 4 066 974 A1**
(43) Veröffentlichungstag der Anmeldung: **05.10.2022**
(21) Anmeldenummer: 22165063.3
(22) Anmeldetag: 29.03.2022
(51) Int. Cl.: B23F 19/05, B23F 23/12, B24B 53/075, B23F 19/00, B23F 5/16

(54) **VERFAHREN ZUM ERZEUGEN VON VERSCHRÄNKUNGEN AN DEN ZAHNFLANKEN EINES INNENVERZAHNTEN WERKSTÜCKS**

(30) Priorität: 01.04.2021 DE 102021108382
(71) Anmelder: Präwema Antriebstechnik GmbH, 37269 Eschwege/Werra (DE)
(72) Erfinder: SCHIEKE, Jörg, 99092 Erfurt-Marbach (DE); HOLDERBEIN, Walter, 37269 Eschwege (DE); REINHARDT, Jörg, 99826 Berka v. d. H. (DE)
(74) Vertreter: Cohausz & Florack

(57) **Zusammenfassung**

Die Erfindung nennt ein Verfahren zum Erzeugen von Modifikationen, wie Verschränkungen (FV1,FV2), an den Zahnflanken (F1,F2) eines innenverzahnten Werkstücks durch ein außenverzahntes Werkzeug (6). Um ein solches Verfahren auch mit Werkzeugmaschinen (1), die über eine reduzierte Anzahl von verstellbaren Achsen verfügen, durchführen zu können, sieht die Erfindung vor, dass das Werkzeug (6) durch Anordnen eines innenverzahnten Abrichtwerkzeugs (15) an der Werkstückspindel (2) der Werkzeugmaschine (1) an der für das jeweils zu honende Werkstück vorgesehenen Position und Ineingriffbringen des Abrichtwerkzeugs (15) mit dem abzurichtenden Werkzeug (6) abgerichtet wird. Die Breite der Zähne (17) des Abrichtwerkzeugs (15) ist kleiner als die Breite des abzurichtenden Werkzeugs (6), so dass das Abrichtwerkzeug (15) um eine Länge entlang der Werkstück-Längsachse (Z1) bewegt werden muss, die einem Vielfachen der Breite (D) der Zähne des Abrichtwerkzeugs (15) entspricht. Anschließend erfolgt die Feinbearbeitung des Werkstücks mit dem in dieser Weise abgerichteten Werkzeug (1). Erfindungsgemäß wird dabei für das Abrichten ein Achskreuzwinkel (Σ_{A}) eingestellt, der während des Abrichtens unverändert beibehalten wird. Die jeweilige Zahnflankenmodifikation (FV1,FV2) wird dann beim Abrichten ausschließlich durch Bewegungen des Abrichtwerkzeugs (15) entlang der Werkzeug-Längsachse (Z1) und der Werkzeug-Querachse (X1) erzeugt.

## Beschreibung

Die Erfindung betrifft ein Verfahren zum Erzeugen von Modifikationen an den Zahnflanken eines innenverzahnten Werkstücks durch ein außenverzahntes Werkzeug, dessen Zähne während einer Honbearbeitung mit den Zähnen des Werkstücks in Eingriff kommen, auf einer Werkzeugmaschine, die eine Werkstückspindel mit einem Drehantrieb zum Rotieren des Werkstücks um eine Werkstückdrehachse, einen Stellantrieb zum Verstellen des Werkstücks entlang einer parallel zur Werkstückachse ausgerichteten Werkstück-Längsachse, einen Stellantrieb zum Verstellen des Werkstücks entlang einer Werkstück-Querachse, die quer zur Werkstücks-Längsachse ausgerichtet ist, eine Werkzeugspindel mit einem Drehantrieb zum Rotieren des Werkzeugs um eine Werkzeug-Drehachse sowie eine Stelleinrichtung zum Einstellen eines Achskreuzwinkels umfasst, unter dem die Drehachsen von Werkstück und Werkzeug während der Honbearbeitung windschief zueinander ausgerichtet.

Es ist bekannt, dass das Einsatzverhalten von Stirnradverzahnungen nicht nur durch ihre Makrogeometrie, sondern auch durch gezielt eingebrachte Flankenmodifikationen oder verfahrensbedingte eintretende Formabweichungen maßgeblich beeinflusst werden kann. Zu diesen Formabweichungen gehören die so genannten "Verschränkungen", bei denen es sich um Verwindungen der Zahnflanken handelt.

Verschränkungen sind in der Regel unerwünscht, können jedoch auch gezielt als Flankenmodifikationen eingebracht werden, um die sich unter Last im Betrieb einstellenden Verformungen der Zähne der Zahnräder zu kompensieren. Dabei ist es bekannt, dass durch eine derartige Modifikation der Flankengeometrie der Zähne von Zahnrädern beispielsweise Zahneingriffsstöße vermieden und das Tragbild der Verzahnung verbessert und so die Leistungsübertragung, die Lebensdauer, die Gleichmäßigkeit der Kraftübertragung und das Geräuschverhalten von Getrieben optimiert werden können.

Aus der DE 10 2012 108 717 A1 ist ein Verfahren bekannt, das auf wirtschaftliche Weise die Erzeugung derart komplexer Flankenmodifikationen mit Hilfe eines Werkzeugs ermöglicht, das eine mit den Zähnen des Zahnrads während einer Feinbearbeitung in Eingriff kommende Verzahnung aufweist, wobei an dem Werkzeug ein Profil geformt wird, das über der Breite des Werkzeugs variiert, indem ein Abrichtrad während eines Abrichtvorgangs entlang der Zahnflanke des jeweils abzurichtenden Zahns bewegt wird. Die Breite der mit dem abzurichtenden Werkzeug in Eingriff kommenden Zähne des Abrichtrads ist um so viel kleiner als die Breite des abzurichtenden Werkzeugs, dass das Abrichtrad zum Überstreichen der Breite des abzurichtenden Werkzeugs um eine Länge in Z-Richtung bewegt werden muss, die einem Vielfachen der Breite der Zähne des Abrichtrades entspricht. Dabei wird das Abrichtrad mit einer sich ändernden Steigung und einem sich ändernden Achskreuzwinkel bezogen auf das abzurichtende Werkzeug in einer parallel zur Drehachse des Werkzeugs ausgerichteten Richtung (Z-Richtung) axial durch die jeweilige Zahnlücke entlang der jeweiligen Zahnflanke des abzurichtenden Werkzeugs ausgeführt, um in das Werkzeug die jeweilige Modifikation der Zahnflankengeometrie einzubringen. Anschließend wird mit dem so abgerichteten Werkzeug das Zahnrad feinbearbeitet. Die in das Werkzeug eingearbeitete Flankenmodifikation wird so auf die Zahnflanken des Zahnrads übertragen.

Das Grundprinzip der Verwendung eines schmalen Abrichtrades, wie es beim voranstehend erläuterten Verfahren eingesetzt wird, ist aus der DE 10 2007 043 402 A1 bekannt. Durch die Verwendung eines derart schmalen Abrichtrades kann alleine durch eine entsprechende Bewegung des Abrichtrades die Gestalt des abzurichtenden Werkzeugs so geformt werden, dass bei der anschließenden Feinbearbeitung eines Zahnrads mit dem solcherart abgerichteten Werkzeug Profilkorrekturen am bearbeiteten Zahnrad erzeugt werden. Die Form des schmalen Abrichtrades muss weder in allen Parametern mit der Werkstückverzahnung übereinstimmen noch müssen aufwändige zusätzliche Steuerungsmöglichkeiten in der jeweiligen Abrichtvorrichtung vorhanden sein. Eine vergleichbare Vorgehensweise ist in der DE 10 2007 043 384 A1 für die Korrektur der Flankenlinie eines Zahnrads vorgeschlagen worden.

Auch das in der WO 2011/157830 A1 beschriebene Verfahren zum Profilieren eines Honwerkzeugs für die Honbearbeitung einer Verzahnung eines Werkstücks beruht auf der Verwendung eines Profilierwerkzeugs mit einer Dicke, die wesentlich geringer ist als die Dicke der jeweils zu profilierenden Verzahnung. Bei diesem Verfahren werden ein ringförmiges, unfertig profiliertes Hohnwerkzeug in einen zum Halten des Honwerkzeugs während der Honbearbeitung eines Werkstücks bestimmten Halter einer Honmaschine und ein Profilierwerkzeug in der Werkstückspindel der Honmaschine eingespannt.

Vor dem Hintergrund des voranstehend erläuterten Standes der Technik hat sich die Aufgabe ergeben, ein Verfahren anzugeben, das es ermöglicht, auch mit Werkzeugmaschinen, die über eine reduzierte Anzahl von verstellbaren Achsen verfügen, Modifikationen, insbesondere Verschränkungen, in die Zahnflanken von außenverzahnten Zahnrädern einzubringen.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden wie der allgemeine Erfindungsgedanke nachfolgend im Einzelnen erläutert.

Bei einem erfindungsgemäßen Verfahren zum Erzeugen von Modifikationen, insbesondere Verschränkungen, an den Zahnflanken eines innenverzahnten Werkstücks durch ein außenverzahntes Hon-Werkzeug, dessen Zähne während einer Honbearbeitung mit den Zähnen des Werkstücks in Eingriff kommen, wird eine Werkzeugmaschine eingesetzt, die eine Werkstückspindel mit einem Drehantrieb zum Rotieren des Werkstücks um eine Werkstückdrehachse, einen Stellantrieb zum Verstellen des Werkstücks entlang einer parallel zur Werkstück-Drehachse C1 ausgerichteten Werkstück-Längsachse Z1, einen Stellantrieb zum Verstellen des Werkstücks entlang einer Werkstück-Querachse X1, die quer zur Werkstück-Längsachse Z1 ausgerichtet ist, eine Werkzeugspindel mit einem Drehantrieb zum Rotieren des Werkzeugs um eine Werkzeug-Drehachse E1 sowie eine Einrichtung zum Einstellen eines Achskreuzwinkels Σ_{A} umfasst, unter dem die Drehachsen C1,E1 von Werkstück und Werkzeug während der Honbearbeitung windschief zueinander ausgerichtet sind.

Dabei umfasst das erfindungsgemäße Verfahren folgende Arbeitsschritte:
a) Abrichten des Werkzeugs, indem ein innenverzahntes Abrichtwerkzeug an der Werkstückspindel an der für das jeweils zu honenden Werkstück vorgesehenen Position angeordnet wird und das Abrichtwerkzeug mit dem abzurichtenden Werkzeug in Eingriff gebracht wird, wobei die Breite der mit dem abzurichtenden Werkzeug in Eingriff kommenden Zähne des Abrichtwerkzeugs um so viel kleiner als die Breite des abzurichtenden Werkzeugs ist, dass das Abrichtwerkzeug zum Überstreichen der Breite des abzurichtenden Werkzeugs um eine Länge entlang der Werkstück-Längsachse bewegt werden muss, die einem Vielfachen der Breite der Zähne des Abrichtwerkzeugs entspricht;
b) Feinbearbeiten des Werkstücks mit dem in dieser Weise abgerichteten Werkzeug.

Erfindungsgemäß wird bei einem solchen Verfahren vor der Durchführung von Arbeitsschritt a) der Achskreuzwinkel Σ_{A} festgelegt.

Nach seiner Festlegung wird dieser zuvor eingestellte Achskreuzwinkel Σ_{A} während der Durchführung der Abricht-Bearbeitung des Werkzeugs (Arbeitsschritt a)) unverändert beibehalten.

Die am Werkzeug abzubildende Zahnflankenmodifikation, insbesondere Verschränkung, wird dann ausschließlich durch Bewegungen des Abrichtwerkzeugs entlang der Werkstück-Längsachse (Z1) und der Werkstück-Querachse (X1) erzeugt.

Das erfindungsgemäße Verfahren erlaubt somit die planmäßige Erzeugung von Modifikationen, insbesondere Verschränkungen, an den Flanken der Zähne eines außenverzahnten Werkstücks auf einer Werkzeugmaschine mit einer minimierten Anzahl von Bewegungsachsen.

So sind die Drehantriebe erforderlich, die das Abrichtwerkzeug und das mit dem Abrichtwerkzeug kämmende Hon-Werkzeug mit Drehzahlen, die dem Zähnezahlverhältnis von Abrichtwerkzeug und Werkzeug entsprechen, um die jeweilige Werkzeug-Drehachse E1 und Werkstück-Drehachse (Abrichter) C1 rotieren.

Für die Abbildung der jeweiligen Zahnflankenmodifikation, insbesondere Verschränkung, an dem Werkzeug werden darüber hinaus nur noch Stellantriebe für eine Verstellung des Werkstücks in der parallel zur Werkstück-Drehachse C1 ausgerichteten Längsrichtung Z1 und in der quer dazu ausgerichteten Querrichtung X1 benötigt.

Ein Verändern des Achskreuzwinkels während der Bearbeitung des Werkzeugs findet dagegen beim erfindungsgemäßen Verfahren nicht statt.

Dementsprechend kann auf Stelleinrichtungen, die ein kontinuierliches Nachführen des Achskreuzwinkels ermöglichen, wie es beim eingangs erläuterten Stand der Technik noch für erforderlich gehalten worden ist, verzichtet werden.

Stattdessen reicht es für das erfindungsgemäße Verfahren aus, wenn vor der Abrichtbearbeitung einmalig der für die Abrichtbearbeitung passende Achskreuzwinkel eingestellt wird. Hierzu können aus dem Stand der Technik bekannte, kostengünstig realisierbare Einstelleinrichtungen vorgesehen sein.

Das erfindungsgemäße Verfahren eignet sich in gleicher Weise zur Erzeugung von Flankenmodifikationen, insbesondere Verschränkungen, von gerad- oder schrägverzahnten Werkstücken. Bei innenverzahnten Werkstücken und dementsprechend außenverzahnten Werkzeugen mit einer Geradverzahnung beschränkt sich die im Zuge der erfindungsgemäß durchgeführten Abrichtbearbeitung erfolgende Verstellung entlang der Werkstück-Querachse X1 auf den Weg, der zur Abbildung der Verschränkung erforderlich ist. Bei innenverzahnten Werkstücken und dementsprechend außenverzahnten Werkzeugen mit einer Geradverzahnung kommt zu der im Zuge der erfindungsgemäß durchgeführten Abrichtbearbeitung zur Abbildung der Verschränkung erfolgenden Verstellung entlang der Werkstück-Querachse X1 auch noch eine zu diesem Zweck in bekannter Weise vorgenommene zusätzliche Verdrehungseinstellung des Abrichtwerkzeugs um die Werkstück-Drehachse C1 hinzu, die erforderlich ist, um das schmale Abrichtwerkzeug entlang der Steigung des abzurichtenden Werkzeugs zu führen.

Beim erfindungsgemäßen Verfahren entstehen somit beim Abrichten (Arbeitsschritt a)) durch zusätzliche Bewegungen des Abrichters in Richtung der Werkstück-Querachse X1 Abweichungen am Hon-Werkzeug, die sich in Form von über die Hon-Werkzeugbreite sich erstreckenden Formabweichungen niederschlagen.

Diese gezielt erzeugten Abweichungen werden bei der anschließend durchgeführten Werkstückbearbeitung auf die Zähne des innenverzahnten Werkstücks übertragen und sind an den Flanken der Zähne des Werkstücks als die jeweils angestrebte Zahnflankenmodifikation feststellbar.

Dabei eignet sich das erfindungsgemäße Verfahren insbesondere zur Erzeugung von Verschränkungen an den Zahnflanken. Die Größe der Verschränkungen und ihre geometrische Ausprägung lässt sich dabei auf einfache Weise durch eine entsprechende Vorgabe der Achsbewegung entlang der Werkstück-Längsachse Z1 und der Werkstück-Querachse X1 präzise einstellen.

Wenn hier davon die Rede ist, dass das erfindungsgemäß eingesetzte Abrichtwerkzeug möglichst schmal sein soll, so bedeutet dies, dass seine Breite optimaler Weise so reduziert ist, dass seine den Zahnflanken des abzurichtenden Werkzeugs zugeordneten Zahnflanken nach Art einer Messerschneide ausgebildet sind oder zumindest so schmal sind, dass jeweils nur eine minimale Überdeckungsfläche zwischen den Zahnflanken des Abrichtwerkzeugs und den Flankenflächen des zu bearbeitenden Werkzeugs gegeben ist. Dementsprechend sieht eine vorteilhafte Ausgestaltung der Erfindung vor, dass die Breite der mit dem abzurichtenden Hon-Werkzeug in Eingriff kommenden Zähne des Abrichtwerkzeugs höchstens einem Fünftel, bevorzugt höchstens einem Achtel, der Breite des abzurichtenden Werkzeugs entspricht. Folglich tritt gemäß der Erfindung das Werkzeug an der einen Werkstück-Stirnfläche in die von der jeweils zu modifizierenden Flanke begrenzte Zahnlücke ein und wird anschließend in Z-Richtung entlang der betreffenden Flanke bewegt, bis es am der anderen Werkstück-Stirnfläche zugeordneten Ende wieder aus der Zahnlücke austritt.

Konkret eignen sich für die erfindungsgemäßen Zwecke insbesondere Abrichtwerkzeuge mit einer Breite von bis zu 6 mm, insbesondere bis zu 4 mm, bis zu 2,5 mm oder bis zu 1,2 mm, wobei Breiten von mindestens 0,5 mm mit Blick auf die Stabilität des Abrichtwerkzeugs besonders praxisgerecht sein können.

Wie die Breite der Zähne eines innenverzahnten Zahnrad-Werkstücks, die parallel zur Werkstück-Drehachse gemessen wird, wird die Breite eines erfindungsgemäß eingesetzten, radförmigen Abrichtwerkzeugs parallel zur Drehachse des Abrichtwerkzeugs gemessen.

Besonders geeignet für die Durchführung des erfindungsgemäßen Verfahrens ist ein ringförmiges, innenverzahntes Abrichtwerkzeug, wie es in der DE 10 2017 104 625 A1 beschrieben ist.

Nachfolgend wird die Erfindung anhand einer ein Ausführungsbeispiel darstellenden Zeichnung näher erläutert. Es zeigen jeweils schematisch:

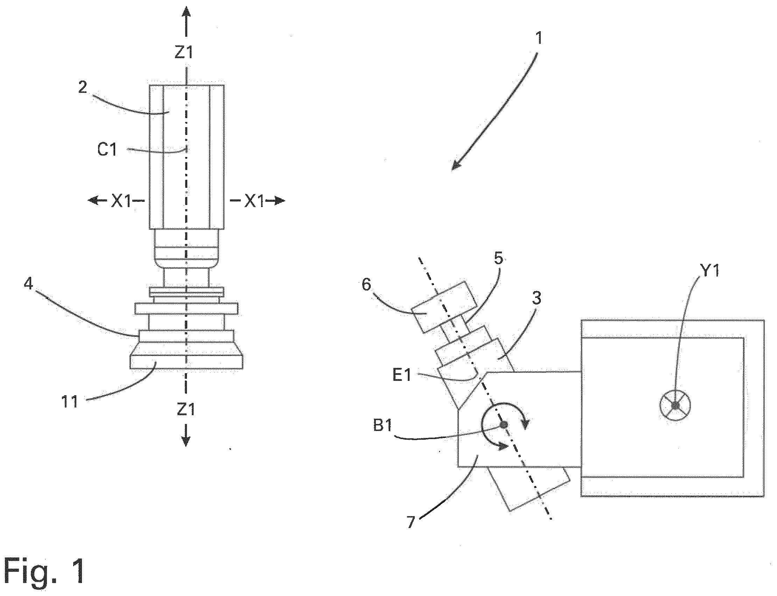

- Fig. 1: eine Werkzeugmaschine zum Innenverzahnungshonen von innenverzahnten Zahnrädern in einer Frontalansicht;
- Fig. 2: die Flankenflächen eines Zahnes eines innenverzahnten Zahnrads in einer perspektivischen Ansicht;
- Fig. 3a: ein Werkzeug zum Abrichten oder Verzahnen eines außenverzahnten Honbearbeitungswerkzeugs in frontaler Ansicht;
- Fig. 3b: das Werkzeug gemäß Fig. 3a in einem Schnitt entlang der in Fig. 3a eingezeichneten Schnittlinie A-A;
- Fig. 4: die im Zuge des erfindungsgemäßen Verfahrens durchgeführten Bewegungen eines Abrichtwerkzeugs während der Abrichtbearbeitung.

Weder die räumliche Zuordnung noch die Breitenverhältnisse sind in den Figuren maßstäblich richtig dargestellt.

Die konventionell aufgebaute Werkzeugmaschine 1 umfasst eine Werkstückspindel 2 und eine Werkzeugspindel 3.

Die Werkstückspindel 2 ist mit einer Aufnahme 4 für das jeweils zu bearbeitende innenverzahnte Werkstück ausgestattet und mit einem Drehantrieb zum Rotieren des Werkstücks um eine Werkstück-Drehachse C1, einem Stellantrieb zum Verstellen der Werkstückspindel 2 entlang einer parallel zur Werkstück-Drehachse C1 ausgerichteten Werkstück-Längsachse Z1 und einem Stellantrieb zum Verstellen entlang einer Werkstück-Querachse X1 verkoppelt, die quer zur Werkstück-Längsachse Z1 ausgerichtet ist.

Die Werkzeugspindel 3 ist mit einer Aufnahme 5 für ein außenverzahntes Werkzeug 6 ausgestattet und mit einem Drehantrieb zum Rotieren des Werkzeugs 6 um eine Werkzeug-Drehachse E1verkoppelt.

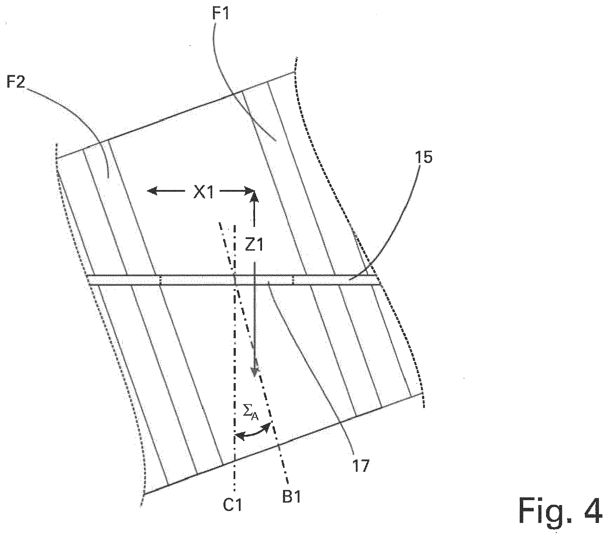

Darüber hinaus ist eine Einrichtung 7 zum Einstellen eines Achskreuzwinkels Σ_{A} vorgesehen, unter dem die Werkstück-Drehachse C1 und die Werkzeug-Drehachse E1 im Gebrauch windschief zueinander ausgerichtet sind, so dass sie sich bei einer Projektion in die Zeichenebene, wie in Fig. 4 gezeigt, schneiden. Die Einrichtung 7 ist zu diesem Zweck in bekannter Weise so ausgelegt, dass sie eine Verschwenkung und Fixierung der Werkzeugspindel 3 in Bezug auf eine Schwenkachse B1 ermöglicht, die quer zur Werkzeug-Drehachse E1 ausgerichtet ist.

Um eine Verstellung der Werkzeugspindel 3 in Bezug auf die durch die Werkstück-Längsachse Z1 und die Werkstück-Querachse X1 aufgespannte Ebene zu ermöglichen, kann zusätzlich eine normal zur betreffende Ebene ausgerichtete Stellachse Y1 vorgesehen sein, die jedoch nicht zur Durchführung des erfindungsgemäßen Verfahrens benötigt wird.

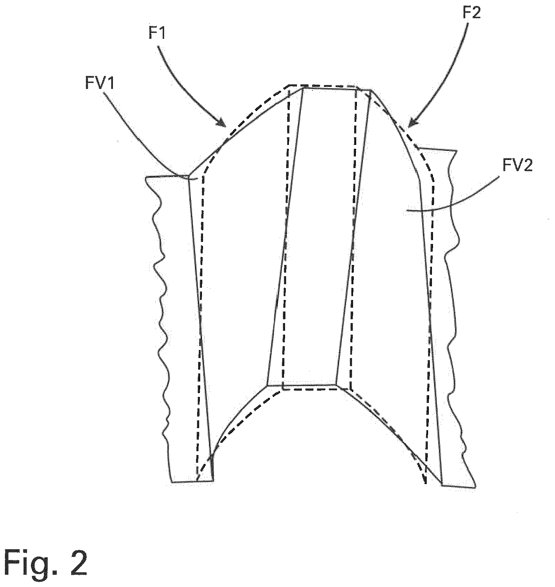

In Fig. 2 sind die an den Zahnflanken F1,F2 eines Zahns eines innenverzahnten Werkstücks zu erzeugenden Verschränkungen dargestellt. Die mit durchgezogenen Linien umgrenzten Flächen deuten dabei die gezielt erzeugten Verschränkungen FV1, FV2 an, d.h. die Flächenabschnitte, in denen die Flankenflächen F1,F2 der erfindungsgemäß bearbeiteten Flankenflächen abweichen von der Gestalt, die die Zahnflankenflächen F1,F2 hätten, wenn sie eine standardmäßige Form hätten, die frei von den Verschränkung oder sonstigen gezielt herbeigeführten Flankenmodifikationen ist. Diese standardmäßige Form der Flankenflächen F1,F2 ist in Fig. 2 mit gestrichelten Linien angedeutet.

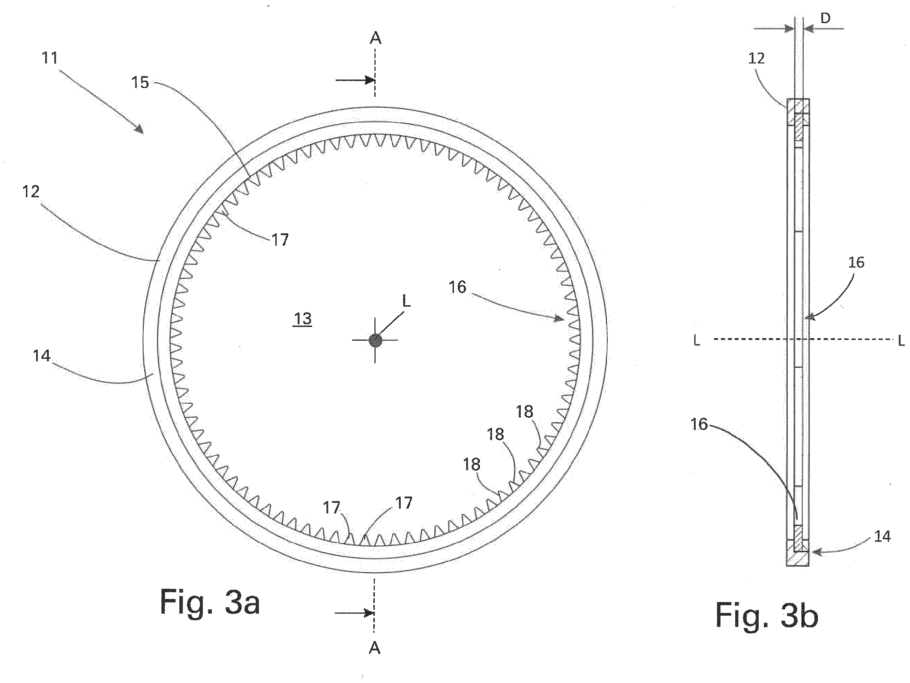

Der Aufbau der in Fig. 3a und Fig. 3b dargestellten ringförmigen Abrichteinheit 11 ist in der oben schon erwähnten DE 10 2017 104 625 A1 im Detail beschrieben, deren Inhalt durch Bezugnahme in die vorliegende Anmeldung aufgenommen wird.

Demnach umfasst die Abrichteinheit 11 einen aus einem geeigneten Stahlwerkstoff geformten Tragring 12, der um eine zentrale Längsachse L umläuft und eine Tragringöffnung 13 umgrenzt. Die zentrale Längsachse L ist dabei konzentrisch zur Tragringöffnung 13 ausgerichtet.

In den der Tragringöffnung 13 zugeordneten Randbereich ist ausgehend von der einen Stirnseite 14 des Tragrings 12 ein umlaufender Absatz eingeformt. Dieser umlaufende Absatz bildet ein Stützelement für ein als Ringelement ausgebildetes und daher in der Praxis auch als "Abrichtrad" bezeichnetes, aus mehreren Ringsegmenten zusammengesetztes Abrichtwerkzeug 15, das an dem Stützelement sitzt und gleichzeitig an der dem Stützelement zugewandten Innenumfangsfläche des Tragrings 12 dicht anliegt.

Das Abrichtwerkzeug 15 weist an seinem der Tragringöffnung 13 zugeordneten Innenumfang eine Innenverzahnung 16 auf, die aus in gleichmäßigen Winkelabständen um das Zentrum des Abrichtwerkzeugs 15 verteilt angeordneten Zähnen 17 gebildet ist. Die Zähne 17 der Innenverzahnung 16 stehen frei über die der Tragringöffnung 13 zugewandten Kante des Stützelements hinaus und weisen an ihren Zahnflanken und gegebenenfalls auch an ihrem Zahnkopf jeweils eine Schneide 18 auf, mit der sie bei der Abrichtbearbeitung am abzurichtenden Hon-Werkzeug 6 Material abtragen.

Die parallel zur Längsachse L gemessene Breite D des Abrichtwerkzeugs 15 ist mit beispielsweise 3,2 mm wesentlich geringer als die Breite der Zähne der Außenverzahnung des zu bearbeitenden Hon-Werkzeugs 6. Dabei besteht das Abrichtwerkzeug 15 beispielsweise aus synthetischem Diamant, der als Schneidstoffschicht auf eine vorzugsweise aus einem Hartmetallwerkstoff bestehende Trägerschicht aufgebracht ist. Die Herstellung des Abrichtwerkzeugs 15 erfolgt in der an sich bekannten, beispielsweise in der EP 2 036 675 B1 und WO 2011/157830 A1 beschriebenen Weise.

Zum Abrichten des Hon-Werkzeugs 6 wird die Abrichteinheit 11 mit dem Abrichtwerkzeug 15 in die Aufnahme der Werkstückspindel 2 gesetzt, in der im normalen Honbetrieb das jeweils zu bearbeitende Werkstück sitzt.

Die Werkzeug-Drehachse E1 und die Werkstück-Drehachse C1 sind dabei unter einem Achskreuzwinkel Σ_{A} ausgerichtet, der unverändert dem Achskreuzwinkel entspricht, unter dem die Drehachsen E1 und C1 während der normalen Honbearbeitung zueinander ausgerichtet sind. Erforderlichenfalls kann jedoch auch ein Achskreuzwinkel Σ_{A} eingestellt werden, der von dem für die Honbearbeitung vorgesehenen Achskreuzwinkel abweicht. Dies kann dann der Fall sein, wenn durch die entsprechend abweichende Einstellung des für die Abrichtbearbeitung vorgesehenen Achskreuzwinkels Σ_{A} zur Erzeugung spezieller Modifikationen der Form der Zahnflanken F1,F2 beigetragen wird. Entscheidend ist hier, dass der einmal eingestellte Achskreuzwinkel Σ_{A} während der Abrichtbearbeitung unverändert beibehalten wird.

Zu Beginn der Abrichtbearbeitung wird die um die Werkstück-Drehachse C1 rotierende Abrichteinheit 11 mit dem Abrichtwerkzeug 15 benachbart zur einen Stirnseite des abzurichtenden, um die Werkzeug-Drehachse E1 rotierenden Hon-Werkzeugs 6 positioniert. Anschließend wird die Abrichteinheit 11 mit dem Abrichtwerkzeug 15 entlang der Werkstück-Längsachse Z1 auf das Hon-Werkzeug 6 zubewegt, bis die Zähne 17 des Abrichtwerkzeugs 15 in die Zahnlücken des hier schrägverzahnten Hon-Werkzeugs 6 greifen und Abrichtwerkzeug 15 und Hon-Werkzeug 6 miteinander zu kämmen beginnen. Gleichzeitig wird das Abrichtwerkzeug 15 in Richtung der Werkstück-Querachse X1 bewegt.

Die Bewegung entlang der Werkstück-Querachse X1 wird dabei so variiert, dass entsprechend der abzubildenden Verschränkung FV1,FV2 die Schneide 18 des jeweils mit einem der Zähne des Hon-Werkzeugs 6 in Eingriff befindlichen Zahns 17 des Abrichtwerkzeugs 15 mehr oder weniger Material von der jeweils bearbeiteten Zahnflanke F1,F2 abträgt.

Mit der Erfindung steht somit ein Verfahren zur Verfügung, das es erlaubt, Modifikationen, wie Verschränkungen FV1,FV2, an den Zahnflanken F1,F2 eines innenverzahnten Werkstücks durch ein außenverzahntes Werkzeug 6 auf einer Werkzeugmaschine 1 zu erzeugen, die über eine reduzierte Anzahl von verstellbaren Achsen verfügt. Hierzu sieht die Erfindung vor, dass das Werkzeug 6 durch Anordnen eines innenverzahnten Abrichtwerkzeugs 15 an der Werkstückspindel 2 der Werkzeugmaschine 1 an der für das jeweils zu honende Werkstück vorgesehenen Position und Ineingriffbringen des Abrichtwerkzeugs 15 mit dem abzurichtenden Werkzeug 6 abgerichtet wird. Die Breite der Zähne 17 des Abrichtwerkzeugs 15 ist dabei kleiner als die Breite des abzurichtenden Werkzeugs 6, so dass das Abrichtwerkzeug 15 um eine Länge entlang der Werkstück-Längsachse Z1 bewegt werden muss, die einem Vielfachen der Breite D der Zähne des Abrichtwerkzeugs 15 entspricht. Anschließend erfolgt die Feinbearbeitung des Werkstücks 6 mit dem in dieser Weise abgerichteten Werkzeug 1. Erfindungsgemäß wird für das Abrichten ein Achskreuzwinkel Σ_{A} eingestellt, der während des Abrichtens unverändert beibehalten wird. Die jeweilige Zahnflankenmodifikation FV1,FV2 wird dann beim Abrichten ausschließlich durch Bewegungen des Abrichtwerkzeugs 15 entlang der Werkzeug-Längsachse Z1 und der Werkzeug-Querachse X1 an dem Werkstück 6 erzeugt.

### BEZUGSZEICHEN

- 1: Werkzeugmaschine
- 2: Werkstückspindel
- 3: Werkzeugspindel
- 4: Aufnahme für das zu bearbeitende innenverzahnte Werkstück
- 5: Aufnahme für ein außenverzahntes Hon-Werkzeug 6
- 6: Hon-Werkzeug
- 7: Einrichtung zum Einstellen eines Achskreuzwinkels Σ_{A}
- 11: ringförmige Abrichteinheit (s. DE 10 2017 104 625 A1)
- 12: Tragring
- 13: Tragringöffnung
- 14: Stirnseite des Tragrings 12
- 15: Abrichtwerkzeug
- 16: Innenverzahnung des Abrichtwerkzeugs 15
- 17: Zähne des Abrichtwerkzeugs 15
- 18: Schneide der Zähne 17
- B1: Schwenkachse der Werkzeugspindel 3
- C1: Werkstück-Drehachse
- D: Breite des Abrichtwerkzeugs 15
- E1: Werkzeug-Drehachse
- F1,F2: Zahnflanken eines Zahns eines innenverzahnten Werkstücks
- FV1,FV2: Verschränkungen
- L: zentrale Längsachse der Abrichteinheit 11
- X1: Werkstück-Querachse
- Y1: Stellachse der Werkzeugspindel 3
- Z1: Werkstück-Längsachse
- Σ_{A}: Achskreuzwinkel

## Patentansprüche

1. Verfahren zum Erzeugen von Modifikationen, wie Verschränkungen (FV1,FV2), an den Zahnflanken (F1,F2) eines innenverzahnten Werkstücks durch ein außenverzahntes Werkzeug (6), dessen Zähne während einer Honbearbeitung mit den Zähnen des Werkstücks in Eingriff kommen, auf einer Werkzeugmaschine (1), die eine Werkstückspindel (2) mit einem Drehantrieb zum Rotieren des Werkstücks um eine Werkstück-Drehachse (C1), einen Stellantrieb zum Verstellen des Werkstücks entlang einer parallel zur Werkstück-Drehachse (C1) ausgerichteten Werkstück-Längsachse (Z1), einen Stellantrieb zum Verstellen des Werkstücks entlang einer Werkstück-Querachse (X1), die quer zur Werkstücks-Längsachse (Z1) ausgerichtet ist, eine Werkzeugspindel (3) mit einem Drehantrieb zum Rotieren des Werkzeugs (6) um eine Werkzeug-Drehachse (E1) sowie eine Einrichtung (7) zum Einstellen eines Achskreuzwinkels (Σ_{A}) umfasst, unter dem die Drehachsen (C1,E1) von Werkstück und Werkzeug (6) während der Honbearbeitung windschief zueinander ausgerichtet sind, umfassend folgende Arbeitsschritte:
a) Abrichten des Werkzeugs (6), indem ein innenverzahntes Abrichtwerkzeug (15) an der Werkstückspindel (2) an der für das jeweils zu honende Werkstück vorgesehenen Position angeordnet wird und das Abrichtwerkzeug (15) mit dem abzurichtenden Werkzeug (6) in Eingriff gebracht wird, wobei die Breite (D) der mit dem abzurichtenden Werkzeug (6) in Eingriff kommenden Zähne (17) des Abrichtwerkzeugs (15) um so viel kleiner als die Breite des abzurichtenden Werkzeugs (6) ist, dass das Abrichtwerkzeug (15) zum Überstreichen der Breite des abzurichtenden Werkzeugs (6) um eine Länge entlang der Werkstück-Längsachse (Z1) bewegt werden muss, die einem Vielfachen der Breite der Zähne des Abrichtwerkzeugs (15) entspricht;
b) Feinbearbeiten des Werkstücks mit dem in dieser Weise abgerichteten Werkzeug (6),
**dadurch gekennzeichnet, dass** vor der Durchführung von Arbeitsschritt a) der Achskreuzwinkel (Σ_{A}) festgelegt wird, dass während der Durchführung des Arbeitsschritts a) der zuvor eingestellte Achskreuzwinkel (Σ_{A}) unverändert beibehalten wird, und **dass** die Modifikation (FV1,FV2) der Zahnflanken (F1,F2) ausschließlich durch Bewegungen des Abrichtwerkzeugs (15) entlang der Werkstück-Längsachse (Z1) und der Werkstück-Querachse (X1) erzeugt wird.

2. Verfahren nach Anspruch 1, **dadurch gekennzeichnet, dass** die Breite des Abrichtwerkzeugs (15) höchstens 6 mm beträgt.

3. Verfahren nach Anspruch 2, **dadurch gekennzeichnet, dass** die Breite (D) des Abrichtwerkzeugs (15) höchstens 2,5 mm beträgt.

4. Verfahren nach einem der voranstehenden Ansprüche, **dadurch gekennzeichnet, dass** die Breite (D) des Abrichtwerkzeugs (15) mindestens 0,5 mm beträgt.
